# EUROPÄISCHE PATENTSCHRIFT

(11) **EP 3 922 423 B1**
(45) Veröffentlichungstag und Bekanntmachung des Hinweises auf die Patenterteilung: **06.11.2024**
(21) Anmeldenummer: 21184913.8
(22) Anmeldetag: 29.04.2016
(51) Int. Cl.: B27M 1/08, B23Q 7/04

(54) **WERKSTÜCKZUFÜHRVORRICHTUNG BZW. WERKSTÜCKABFÜHRVORRICHTUNG**
WORKPIECE FEEDING DEVICE OR WORKPIECE REMOVING DEVICE
DISPOSITIF D'ALIMENTATION EN PIÈCES OU DISPOSITIF D'ÉVACUATION DE PIÈCES

(30) Priorität: 08.05.2015 DE 102015208618
(43) Veröffentlichungstag der Anmeldung: 15.12.2021
(62) Teilanmeldung aus: 16721758.7
(73) Patentinhaber: HOMAG GmbH, 72296 Schopfloch (DE)
(72) Erfinder: Schmid, Gordian, 77776 Bad Rippoldsau-Schapbach (DE); Schmieder, Volker, 72116 Mössingen (DE)
(74) Vertreter: Grauel, Andreas

(56) Entgegenhaltungen:
- EP-A1- 1 832 402
- EP-A1- 2 098 344
- EP-A1- 3 023 193
- EP-A2- 1 992 464

## Beschreibung

### Technisches Gebiet

Die Erfindung betrifft eine Werkstückzuführvorrichtung gemäß dem Oberbegriff des Patentanspruchs 1, insbesondere zur Zuführung von Werkstücken zu einer Bearbeitungsvorrichtung, insbesondere zum Bearbeiten von Werkstücken aus Holz, Holzwerkstoffen, Kunststoff oder dergleichen. Auch betrifft die Erfindung eine Werkstückabführvorrichtung gemäß dem Oberbegriff des Patentanspruchs 6, insbesondere zur Abführung von Werkstücken von einer entsprechenden Bearbeitungsvorrichtung. Auch betrifft die Erfindung ein Verfahren zum Betreiben einer solchen Werkstückzuführvorrichtung und ein Verfahren zum Betreiben einer solchen Werkstückabführvorrichtung gemäß den Oberbegriffen der Patentansprüche 12 und 15. Eine derartige Werkstücktransportvorrichtung, eine derartige Werkstückabführvorrichtung und derartige Verfahren gehen beispielsweise aus der EP 1 992 464 A2 hervor.

### Stand der Technik

Die Werkstückzuführvorrichtung und/oder die Werkstückabführvorrichtung dienen der Zuführung und/oder Abführung von Werkstücken zu bzw. von einer Bearbeitungsvorrichtung zur Bearbeitung von Werkstücken, insbesondere zum Bearbeiten von Werkstücken aus Holz, Holzwerkstoffen, Kunststoff oder dergleichen. Solche Bearbeitungsvorrichtungen weisen üblicherweise einen Werkstücktisch mit einer Werkstückhalterung auf, mittels welcher ein Werkstück anordenbar und zumindest zeitweise haltbar ist, um während der Halterung das Werkstück zu bearbeiten. Solche Werkstücktische mit Werkstückhalterungen können im Wesentlichen stillstehend oder mittels Vorschubeinrichtungen verfahrbar ausgebildet sein. Dabei kann bei einer im Wesentlichen stillstehenden Ausführung des Werkstücktischs mit der Werkstückhalterung das Werkzeug zur Bearbeitung des Werkstücks an das Werkstück selbst herangeführt werden, um aufgrund einer erzeugten Relativbewegung von Werkstück und Werkzeug eine Bearbeitung des Werkstücks zu bewirken. Alternativ dazu oder auch zusätzlich kann bei einer im Wesentlichen verfahrbaren Ausführung des Werkstücktischs mit der Werkstückhalterung das Werkstück zur Bearbeitung an das Werkzeug selbst herangeführt werden, um aufgrund einer erzeugten Relativbewegung von Werkstück und Werkzeug eine Bearbeitung des Werkstücks zu bewirken. Dazu kann die Bearbeitungsvorrichtung beispielsweise ein stillstehendes oder verfahrbares Portal oder einen stillstehenden oder verfahrbaren Ausleger oder Ähnliches aufweisen, an welchem das Werkzeug zur Bearbeitung des Werkstücks wiederum stillstehend oder verlagerbar geführt werden kann, um zusammen mit einer etwaigen Verlagerung des Werkstücks die beabsichtigten Bearbeitungen am Werkstück vornehmen zu können. Dabei kann entweder das Werkstück am Werkzeug vorbeigeführt werden oder umgekehrt oder es können sich auch sowohl das Werkstück als auch das Werkzeug bei der Bearbeitung verlagern, so dass eine gezielte Relativbewegung zwischen Werkzeug und Werkstück vorgesehen wird, um das Werkstück beispielsweise entlang einer Seite oder Kante bearbeiten zu können.

Bei Bearbeitungsvorrichtungen nach dem Stand der Technik müssen die Werkstücke vor deren Bearbeitung der Bearbeitungsvorrichtung zugeführt werden, so dass die Werkstücke von der Bearbeitungsvorrichtung automatisiert bearbeitet werden können. Auch müssen solche bearbeiteten Werkstücke dann von der Bearbeitungsvorrichtung wieder abgeführt werden, so dass die Werkstücke, die bearbeitet sind, auf der Bearbeitungsvorrichtung Platz machen für Werkstücke, die noch zu bearbeiten sind. Hierfür sind Werkstückzuführvorrichtungen und Werkstückabführvorrichtungen vorzusehen.

Bei heutigen Werkstückzuführvorrichtungen und Werkstückabführvorrichtungen werden Werkstücke nacheinander seriell zugeführt und seriell wieder abgeführt, so dass der Werker an der Maschine die zu bearbeitenden Werkstücke nacheinander auf die Werkstückzuführvorrichtung legen muss und die bearbeiteten Werkstücke nacheinander von der Werkstückabführvorrichtung wegnehmen muss.

Bei einer Erhöhung der Bearbeitungskapazität der Bearbeitungsvorrichtung werden teilweise aber bereits schon mehrere durchaus auch individuelle Werkstücke nebeneinander in der Bearbeitungsvorrichtung aufgenommen und bearbeitet, so dass die Reihenfolge der Zuführung der individuellen Werkstücke für die genaue Bearbeitung wesentlich ist. Gleiches gilt für die Abführung und anschließende Handhabung individualisierter bearbeiteter Werkstücke. Auch hier ist die Reihenfolge der Entnahme der individuellen Werkstücke wesentlich, um diese in der weiteren Folge richtig zu handhaben.

### Darstellung der Erfindung, Aufgabe, Lösung, Vorteile

Es ist die Aufgabe der Erfindung, eine Werkstückzuführvorrichtung und eine Werkstückabführvorrichtung zu schaffen, welche einfach aufgebaut sind und dennoch eine sichere Handhabung von Werkstücken erlauben. Auch ist es die Aufgabe der vorliegenden Erfindung, ein Verfahren zum Betreiben einer solchen Werkstückzuführvorrichtung oder Werkstückabführvorrichtung zu schaffen, das eine einfache und sichere Handhabung der Werkstücke erlaubt.

Die Erfindung ist in den unabhängigen Ansprüchen definiert.

Die Aufgabe zur Werkstückzuführvorrichtung wird mit den Merkmalen von Anspruch 1 gelöst.

Ein Ausführungsbeispiel der Erfindung betrifft eine Werkstückzuführvorrichtung mit zumindest zwei Werkstückaufnahmepositionen zum Auflegen von einem Werkstück in der jeweiligen Werkstückaufnahmeposition und mit zumindest einer Werkstückentnahmeposition zum Entnehmen eines Werkstücks, mit Werkstückfördermitteln zum Fördern aufgelegter Werkstücke in einer Förderrichtung von der zumindest einen Werkstückaufnahmeposition hin zu einer der Werkstückentnahmepositionen, wobei zumindest ein Signalmittel vorgesehen ist, zur Signalisierung einer ausgewählten Werkstückaufnahmeposition, in welcher ein Werkstück auflegbar ist. Dadurch kann dem Werker anhand des zuvor bestimmten Bearbeitungsprogramms signalisiert werden, welches Werkstück er auf welche Werkstückaufnahmeposition legen soll, damit die Werkstücke in der richtigen Reihenfolge aufgenommen, transportiert und beispielsweise zu einer Bearbeitungsvorrichtung übergeben werden, damit sie auch den Vorgaben entsprechend richtig bearbeitet werden können. Dabei kann die Werkstückzuführvorrichtung eine Werkstückentnahmeposition aufweisen, auf welche die Werkstücke unabhängig von ihrer Werkstückaufnahmeposition verbracht werden können oder die Werkstückzuführvorrichtung kann mehr als eine Werkstückentnahmeposition aufweisen, in welche die Werkstücke beispielsweise abhängig von ihrer Werkstückaufnahmeposition verbracht werden können.

Besonders vorteilhaft ist es, wenn die zumindest zwei Werkstückaufnahmepositionen in einer Richtung senkrecht zur Förderrichtung benachbart zueinander angeordnet sind. Dadurch können die zumindest zwei Werkstücke in ihrer Längsrichtung nebeneinander aufgelegt und weitergefördert werden. So können diese zumindest zwei Werkstücke nebeneinander zu einer Werkstückentnahmeposition gefördert und dort gemeinsam entnommen und einer Bearbeitungsvorrichtung zugeführt werden, so dass diese optimiert bearbeitet werden können, was die Kapazität der Bearbeitungsvorrichtung steigern kann.

Gemäß eines weiteren Aspekts der Erfindung ist es vorteilhaft, wenn zumindest einer Werkstückaufnahmeposition oder jeder bis auf eine Werkstückaufnahmeposition oder jeder Werkstückaufnahmeposition ein Signalmittel zugeordnet ist, welches aktivierbar ist, um anzuzeigen, dass ein Werkstück in die zugeordnete Werkstückaufnahmeposition auflegbar ist. Dabei kann das oder die Signalmittel derart vorgesehen sein, dass die Werkstückaufnahmeposition des Auflegens angezeigt wird. So kann jeder Werkstückaufnahmeposition ein Signalmittel zugeordnet sein, das aktivierbar ist. Auch kann bei mehreren Werkstückaufnahmepositionen beispielsweise nur der zweiten Werkstückaufnahmeposition und den folgenden Werkstückaufnahmepositionen ein Signalmittel zugeordnet sein, was bedeuten kann, dass wenn nichts angezeigt ist, die erste Werkstückaufnahmeposition zu belegen ist. Auch kann einer speziell ausgewählten Werkstückaufnahmeposition ein Signalmittel zugeordnet sein, welches bei spezifischen Werkstücken zu belegen wäre, wobei ansonsten die anderweitig vorhandenen Werkstückaufnahmepositionen frei wählbar wären. Dies kann bei der Bearbeitung von Sonderteilen vorteilhaft sein.

Besonders vorteilhaft ist es, wenn das Signalmittel ein Anschlagmittel aufweist, welches ausfahrbar ist, um anzuzeigen, dass ein Werkstück in die dem Anschlagmittel zugeordnete Werkstückaufnahmeposition auflegbar ist. Dadurch kann die Lage des Werkstücks definiert werden, indem das Werkstück an dem Anschlagmittel anzulegen ist. Ist das Anschlagmittel nicht ausgefahren, wird das Werkstück dort auch vorteilhaft nicht angelegt, sondern an einer anderweitigen Werkstückaufnahmeposition. Dabei kann an einer Werkstückaufnahmeposition das Anschlagmittel beispielsweise auch dauerhaft ausgefahren bzw. angeordnet sein, so dass das Werkstück dort auflegbar ist, sofern keine anderen Werkstückaufnahmepositionen angezeigt werden.

Es ist weiterhin vorteilhaft, wenn das Signalmittel ein optisches und/oder akustisches Signalmittel aufweist, mittels welchem eine ausgewählte Werkstückaufnahmeposition anzeigbar ist, um anzuzeigen, dass ein Werkstück in die von dem Signalmittel angezeigte Werkstückaufnahmeposition auflegbar ist. Mittels der akustischen bzw. optischen Signalmittel kann unmittelbar angezeigt werden, wo das Werkstück, insbesondere das nächste Werkstück auflegbar ist. Dadurch können dem Werker die Reihenfolge und die Position des Werkstücks angezeigt werden, was in Abhängigkeit der vorgegebenen Reihenfolge der Werkstückbearbeitung vorprogrammierbar ist.

Die Aufgabe zur Werkstückabführvorrichtung wird mit den Merkmalen von Anspruch 6 gelöst.

Ein Ausführungsbeispiel der Erfindung betrifft eine Werkstückabführvorrichtung mit zumindest einer Werkstückaufnahmeposition zum Auflegen von einem Werkstück in der jeweiligen Werkstückaufnahmeposition und mit zumindest zwei Werkstückentnahmepositionen zum Entnehmen eines Werkstücks, mit Werkstückfördermitteln zum Fördern aufgelegter Werkstücke in einer Förderrichtung von der zumindest einen Werkstückaufnahmeposition hin zu einer der Werkstückentnahmepositionen, wobei zumindest ein Signalmittel vorgesehen ist, zur Signalisierung einer ausgewählten Werkstückentnahmeposition, von welcher ein Werkstück entnehmbar ist. So kann ein Werkstück beispielsweise von einem Manipulator von einer Bearbeitungsvorrichtung auf die Werkstückabführvorrichtung abgelegt und mit ihr abgeführt werden. Sind zwei oder mehr als zwei Werkstückaufnahmepositionen vorhanden, so können durchaus auch mehr als ein Werkstück gleichzeitig auf der Werkstückabführvorrichtung abgelegt und abtransportiert werden. Im Anschluss daran kann dann vom Werker eines der nebeneinander in den Werkstückentnahmepositionen liegenden Werkstücke entnommen werden, wobei das zu entnehmende Werkstück mittels der Signalmittel angezeigt wird.

Dabei ist es vorteilhaft, wenn die zumindest zwei Werkstückentnahmepositionen in einer Richtung senkrecht zur Förderrichtung benachbart zueinander angeordnet sind. Dadurch wird erreicht, dass die Werkstückentnahmepositionen eine parallele Abführung erlauben, wobei dann dem Werker angezeigt wird, welches Werkstück von welcher Werkstückentnahmeposition bzw. auch in welcher Reihenfolge zu entnehmen ist.

Auch ist es vorteilhaft, wenn zumindest einer Werkstückentnahmeposition oder jeder bis auf eine Werkstückentnahmeposition oder jeder Werkstückentnahmeposition ein Signalmittel zugeordnet ist, welches aktivierbar ist, um anzuzeigen, dass ein Werkstück von der zugeordneten Werkstückentnahmeposition entnehmbar ist. Dadurch ist es möglich, dass eindeutig signalisiert werden kann, welches Werkstück als nächstes von einem Werker zu entnehmen ist.

Dabei ist es vorteilhaft, wenn das Signalmittel ein Anschlagmittel aufweist, welches ein- oder ausfahrbar ist, um anzuzeigen, dass ein Werkstück von der dem Anschlagmittel zugeordnete Werkstückentnahmeposition entnehmbar ist. So kann das Anschlagmittel vorgesehen sein, um den Transport der Werkstücke zu blockieren und beispielsweise durch ein Absenken des Anschlagmittels ist es möglich anzuzeigen, welches Werkstück zu entnehmen ist.

Auch ist es vorteilhaft, wenn das Signalmittel ein optisches und/oder akustisches Signalmittel aufweist, mittels welchem eine ausgewählte Werkstückentnahmeposition anzeigbar ist, um anzuzeigen, dass ein Werkstück von der von dem Signalmittel angezeigten Werkstückentnahmeposition entnehmbar ist. Auch dadurch ist anzeigbar, welche Werkstückentnahmeposition für die Entnahme ausgewählt ist.

Gemäß eines weiteren Aspekts der Erfindung ist eine Werkstücktransportvorrichtung vorgesehen, mit einer erfindungsgemäßen Werkstückzuführvorrichtung und/oder mit einer erfindungsgemäßen Werkstückabführvorrichtung. Die Werkstückzuführvorrichtung kann somit alleine oder in Kombination mit einer Werkstückabführvorrichtung vorgesehen sein. Auch die Werkstückabführvorrichtung kann alleine oder in Kombination mit einer Werkstückzuführvorrichtung vorgesehen sein.

Die Aufgabe zum Verfahren zum Betreiben einer Werkstückzuführvorrichtung wird mit den Merkmalen von Anspruch 12 gelöst.

Ein Ausführungsbeispiel der Erfindung betrifft ein Verfahren zum Betreiben einer Werkstückzuführvorrichtung mit zumindest zwei Werkstückaufnahmepositionen zum Auflegen von einem Werkstück in der jeweiligen Werkstückaufnahmeposition und mit zumindest einer Werkstückentnahmeposition zum Entnehmen eines Werkstücks, mit Werkstückfördermitteln zum Fördern aufgelegter Werkstücke in einer Förderrichtung von der zumindest einen Werkstückaufnahmeposition hin zu einer der Werkstückentnahmepositionen, wobei zumindest ein Signalmittel vorgesehen ist und angesteuert wird, um eine ausgewählte Werkstückaufnahmeposition anzuzeigen, in welcher ein Werkstück aufzulegen ist.

Dabei ist es vorteilhaft, wenn das Signalmittel ein Anschlagmittel aufweist, welches ausgefahren wird, um anzuzeigen, dass ein Werkstück in die dem Anschlagmittel zugeordnete Werkstückaufnahmeposition aufzulegen ist.

Auch ist es vorteilhaft, wenn das Signalmittel ein optisches und/oder akustisches Signalmittel aufweist, welches aktiviert wird, um anzuzeigen, dass ein Werkstück in die von dem Signalmittel angezeigte Werkstückaufnahmeposition aufzulegen ist.

Die Aufgabe zum Verfahren zum Betreiben einer Werkstückabführvorrichtung wird mit den Merkmalen von Anspruch 15 gelöst.

Ein Ausführungsbeispiel der Erfindung betrifft ein Verfahren zum Betreiben einer Werkstückabführvorrichtung mit zumindest einer Werkstückaufnahmeposition zum Auflegen von einem Werkstück in der jeweiligen Werkstückaufnahmeposition und mit zumindest zwei Werkstückentnahmepositionen zum Entnehmen eines Werkstücks, mit Werkstückfördermitteln zum Fördern aufgelegter Werkstücke in einer Förderrichtung von der zumindest einen Werkstückaufnahmeposition hin zu einer der Werkstückentnahmepositionen, wobei zumindest ein Signalmittel vorgesehen ist und angesteuert wird, zur Signalisierung einer ausgewählten Werkstückentnahmeposition, von welcher ein Werkstück zu entnehmen ist.

Dabei ist es vorteilhaft, wenn das Signalmittel ein Anschlagmittel aufweist, welches ein- oder ausgefahren wird, um anzuzeigen, dass ein Werkstück von der dem Anschlagmittel zugeordneten Werkstückentnahmeposition zu entnehmen ist.

Auch ist es vorteilhaft, wenn das Signalmittel ein optisches und/oder akustisches Signalmittel aufweist, welches angesteuert wird, um anzuzeigen, dass ein Werkstück von der von dem Signalmittel angezeigten Werkstückentnahmeposition zu entnehmen ist.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Figur 1: eine schematische Darstellung einer kombinierten Werkstückzuführvorrichtung mit einer Werkstückabführvorrichtung insbesondere einer Bearbeitungsvorrichtung für Werkstücke,
- Figur 2: eine schematische Darstellung einer Werkstückzuführvorrichtung und einer Werkstückabführvorrichtung in einem Betriebsfall, und
- Figur 3: eine schematische Darstellung einer Werkstückzuführvorrichtung und einer Werkstückabführvorrichtung in einem anderen Betriebsfall.

### Bevorzugte Ausführung der Erfindung

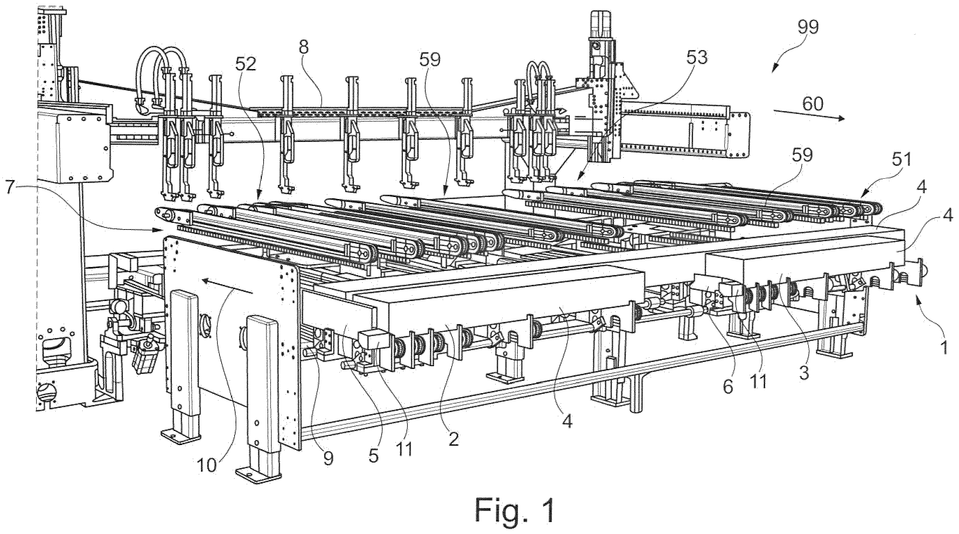

Die Figuren 1, 2 und 3 zeigen eine Werkstückzuführvorrichtung und eine Werkstückabführvorrichtung für eine Bearbeitungsvorrichtung, insbesondere zum Bearbeiten von Werkstücken aus Holz, Holzwerkstoffen, Kunststoff oder dergleichen. Dabei können die Werkstücke beispielsweise eher längliche, balkenartige Werkstücke oder eher flache, eher zweidimensionale, brettartige Werkstücke sein. Dabei können die Werkstücke vorteilhaft längs zur Längsrichtung eines Werkstücktischs der Bearbeitungsvorrichtung zugeführt werden. Alternativ wäre es auch möglich, wenn die Werkstücke in einer anderen Ausrichtung zuführbar sind.

Die Bearbeitungsvorrichtung weist dabei vorteilhaft einen Werkstücktisch mit einer Werkstückhalterung mit Spannelementen zum Spannen zumindest eines Werkstücks oder mehrerer Werkstücke auf, mittels welcher das Werkstück oder die Werkstücke zur Bearbeitung sicher gehalten werden können. Der Werkstücktisch ist bevorzugt mit einer Vorschubeinheit verbunden ausgebildet, mittels welcher der Werkstücktisch zumindest in einer Richtung verlagerbar ausgebildet ist.

Weiterhin ist ein Werkstückmanipulator vorgesehen, welcher dazu dient, ein Werkstück oder mehrere Werkstücke von der Werkstückzuführvorrichtung der Werkstückhalterung des Werkstücktischs zuzuführen und das Werkstück oder die Werkstücke auf dem Werkstücktisch zu platzieren. Auch dient der Manipulator beispielsweise dazu, das Werkstück oder die Werkstücke von dem Werkstücktisch zu der Werkstückabführvorrichtung zuzuführen, damit dieses oder diese abgeführt werden können.

Die Figuren 1 bis 3 zeigen jeweils eine Werkstückzuführvorrichtung 1 und eine Werkstückabführvorrichtung 51, die übereinander angeordnet sind. Die Werkstückabführvorrichtung 51 ist oberhalb der Werkstückzuführvorrichtung 1 angeordnet. Grundsätzlich kann die relative Anordnung der Werkstückzuführvorrichtung 1 zu der Werkstückabführvorrichtung 51 auch anderweitig möglich sein. Die Figuren 1 bis 3 zeigen, dass die Werkstückzuführvorrichtung 1 und eine Werkstückabführvorrichtung 51 als Baueinheit ausgebildet sind, so dass eine kombinierte Werkstücktransportvorrichtung 99 gebildet ist.

Die Werkstückzuführvorrichtung 1 weist dabei vorteilhaft zumindest zwei Werkstückaufnahmepositionen 2, 3 zum Auflegen eines Werkstücks 4 in der jeweiligen Werkstückaufnahmeposition 2, 3 auf. In der Figur 1 ist gezeigt, dass in einer hintersten Reihe zwei Werkstücke 4 in ihrer Längsrichtung nebeneinander angeordnet sind. In einer davor angeordneten zweiten Reihe ist nur ein Werkstück 4 in der ersten Werkstückaufnahmeposition 2 angeordnet. Das Werkstück 4 der zweiten Reihe ist länger als die Werkstücke 4 in der ersten Reihe.

Zum Anlegen der Werkstücke 4 in der jeweiligen Werkstückaufnahmeposition 2, 3 sind Anschlagmittel 5, 6 vorgesehen, an welche die Werkstücke 4 jeweils angelegt werden können, damit sie richtig positioniert sind. Das Anschlagmittel 5 ist dabei vorteilhaft fest montiert, so dass es immer vorhanden ist und vorsteht, damit ein Werkstück anlegbar ist. Das Anschlagmittel 6 ist vorteilhaft anhebbar und versenkbar ausgebildet, so dass es bei Bedarf angehoben werden kann und alternativ bei Nichtgebrauch auch abgesenkt werden kann. In Figur 1 ist das Anschlagmittel 6 angehoben, so dass das Werkstück 4 an diesem Anschlagmittel 6 anlegbar ist.

Weiterhin weist die Werkstückzuführvorrichtung 1 zumindest eine Werkstückentnahmeposition 7 auf, in welche ein Werkstück förderbar bzw. transportierbar ist, um aus dieser Werkstückentnahmeposition 7 entnommen werden zu können, um das Werkstück 4 weiter bearbeiten zu können. Die zumindest eine Werkstückentnahmeposition 7, vorteilhaft können auch zumindest zwei solche Werkstückentnahmepositionen 7 vorhanden sein, dient dem Entnehmen eines Werkstücks 4, beispielsweise mittels eines Manipulators 8, insbesondere um das Werkstück 4 einem Werkstücktisch zuführen zu können.

Die Werkstückzuführvorrichtung 1 weist Werkstückfördermittel 9 auf, zum Fördern aufgelegter Werkstücke 4 in einer Förderrichtung 10 von der zumindest einen Werkstückaufnahmeposition 2, 3 hin zu einer der Werkstückentnahmepositionen 7.

Die Werkstückzuführvorrichtung 1 weist zumindest ein Signalmittel 11 auf, zur Signalisierung einer ausgewählten Werkstückaufnahmeposition 2, 3, in welcher ein Werkstück 4 auflegbar ist. Mittels des Signalmittels wird die Werkstückaufnahmeposition 2, 3 angezeigt, welche für das nächste Werkstück ausgewählt ist und in welche das nächste Werkstück aufzulegen ist.

Dabei ist es vorteilhaft, wenn zumindest einer Werkstückaufnahmeposition 2, 3 oder jeder bis auf eine Werkstückaufnahmeposition 2, 3 oder jeder Werkstückaufnahmeposition 2, 3 ein Signalmittel 11 zugeordnet ist, welches aktivierbar ist, um anzuzeigen, dass ein Werkstück 4 in die zugeordnete Werkstückaufnahmeposition 2, 3 auflegbar ist.

Dabei kann das Signalmittel 11 auch als ein Anschlagmittel 6 ausgebildet sein, welches ausfahrbar ist, um anzuzeigen, dass ein Werkstück 4 in die dem Anschlagmittel 6 zugeordnete Werkstückaufnahmeposition 3 auflegbar ist.

Alternativ oder zusätzlich kann das Signalmittel 11 ein optisches und/oder akustisches Signalmittel aufweisen, mittels welchem eine ausgewählte Werkstückaufnahmeposition 2, 3 anzeigbar ist, um anzuzeigen, dass ein Werkstück 4 in die von dem Signalmittel 11 angezeigte Werkstückaufnahmeposition 2, 3 auflegbar ist. Dabei kann das Signalmittel eine Lampe, eine Leuchte, ein Bildschirm, ein Display etc. sein. Auch kann eine akustische Signalisierung alternativ oder zusätzlich zu einer optischen Anzeige vorgenommen werden.

Die Figur 1 zeigt, dass die zumindest zwei Werkstückaufnahmepositionen 2, 3 in einer Richtung senkrecht zur Förderrichtung 10 benachbart zueinander angeordnet sind. Durch die Signalisierung der Signalmittel wird jeweils die Werkstückaufnahmeposition 2, 3 ausgewählt, welche von einem Werker mit einem Werkstück zu belegen ist. Dabei hängt die Belegung beispielsweise vom Bearbeitungsprogramm, den Dimensionen des Werkstücks etc. ab.

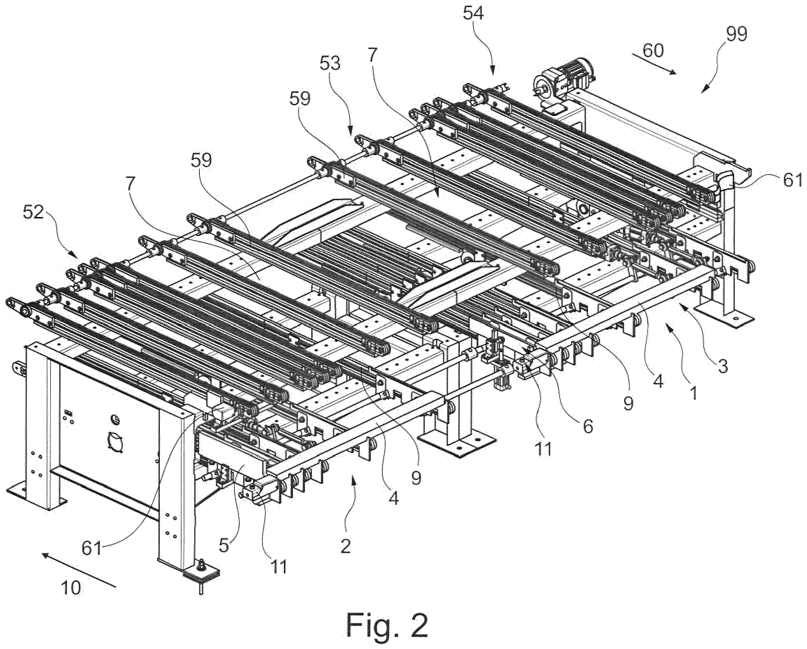

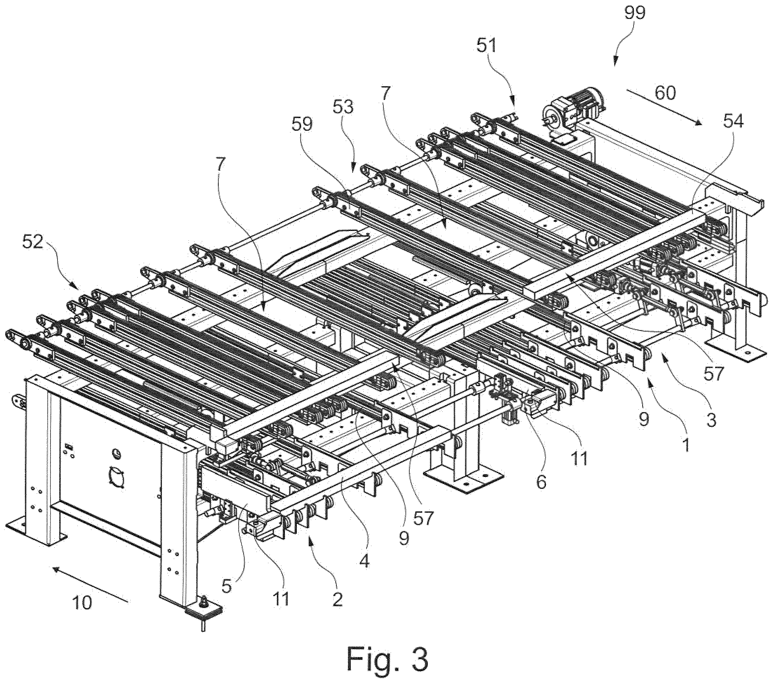

Die Figur 2 zeigt, dass das Anschlagmittel 6 aktuatorisch ausgefahren ist, um dort ein Werkstück 4 auflegen zu können. Die Figur 3 zeigt, dass das Anschlagmittel 6 nach unten gefahren ist, um dort kein Werkstück auflegen zu lassen.

Die Werkstückabführvorrichtung 51 weist dabei vorteilhaft zumindest eine Werkstückaufnahmeposition 52, vorteilhaft auch mehr als eine Werkstückaufnahmeposition 52, 53 auf, zum Auflegen eines Werkstücks 54 in der jeweiligen Werkstückaufnahmeposition 52, 53. In der Figur 3 ist gezeigt, dass zwei Werkstücke 54 in ihrer Längsrichtung nebeneinander angeordnet sind, die gleichzeitig abgeführt sind.

Zum Anlegen der Werkstücke 54 in der jeweiligen Werkstückaufnahmeposition 52, 53 können Anschlagmittel vorgesehen sein. Bei einer automatisierten Abführung, beispielsweise von einem Werkstücktisch, kann dies jedoch auch ohne Anschläge mittels eines Manipulators 8 lagerichtig erfolgen.

Weiterhin weist die Werkstückabführvorrichtung 51 zumindest eine, vorteilhaft mehr als eine, Werkstückentnahmeposition 57 auf, in welche ein Werkstück 54 förderbar bzw. transportierbar ist, um aus dieser Werkstückentnahmeposition 57 beispielsweise von einem Werker entnommen werden zu können, um das Werkstück 54 weiter handhaben zu können. Die zumindest eine Werkstückentnahmeposition 57, vorteilhaft können auch zumindest zwei solche Werkstückentnahmepositionen 57 vorhanden sein, dient dem Entnehmen eines Werkstücks 54.

Die Werkstückabführvorrichtung 51 weist ebenso Werkstückfördermittel 59 auf, zum Fördern aufgelegter Werkstücke 54 in einer Förderrichtung 60 von der zumindest einen Werkstückaufnahmeposition 52, 53 hin zu einer der Werkstückentnahmepositionen 57.

Die Werkstückabführvorrichtung 51 weist zumindest ein Signalmittel 61 auf, zur Signalisierung einer ausgewählten Werkstückentnahmeposition 57, von welcher ein Werkstück 54 entnehmbar ist. Mittels des Signalmittels 61 wird die Werkstückentnahmeposition 57 angezeigt, von welcher das nächste Werkstück 54 zu entnehmen ist.

Dabei ist es vorteilhaft, wenn zumindest einer Werkstückentnahmeposition 57 oder jeder bis auf eine Werkstückentnahmeposition 57 oder jeder Werkstückentnahmeposition 57 ein Signalmittel 61 zugeordnet ist, welches aktivierbar ist, um anzuzeigen, dass ein Werkstück 54 von der zugeordneten Werkstückentnahmeposition 57 entnehmbar ist.

Dabei kann das Signalmittel 61 auch als ein Anschlagmittel ausgebildet sein, welches zumindest teilweise einfahrbar ist, um anzuzeigen, dass ein Werkstück 54 von der dem Anschlagmittel zugeordneten Werkstückentnahmeposition 57 entnehmbar ist.

Alternativ oder zusätzlich kann das Signalmittel 61 ein optisches und/oder akustisches Signalmittel aufweisen, mittels welchem eine ausgewählte Werkstückentnahmeposition 57 anzeigbar ist, um anzuzeigen, dass ein Werkstück 54 von der von dem Signalmittel 61 angezeigten Werkstückentnahmeposition 57 entnehmbar ist. Dabei kann das Signalmittel eine Lampe, eine Leuchte, ein Bildschirm, ein Display etc. sein. Auch kann eine akustische Signalisierung alternativ oder zusätzlich zu einer optischen Anzeige vorgenommen werden.

Die Figur 3 zeigt, dass die zumindest zwei Werkstückentnahmepositionen 57 in einer Richtung senkrecht zur Förderrichtung 60 benachbart zueinander angeordnet sind. Durch die Signalisierung der Signalmittel 61 wird jeweils die Werkstückentnahmeposition 57 ausgewählt, von welcher ein Werker ein Werkstück 54 zu entnehmen hat. Dabei hängt die Entnahme von dem Werkstück 54 selbst und von dessen weiterer Handhabung ab.

Die Werkstückfördermittel 9, 59 weisen vorteilhaft Riemen- und/oder Kettenfördereinrichtungen mit einer Mehrzahl von umlaufenden Riemen und/oder Ketten auf und/oder eine Mehrzahl von Rollen auf, mittels welchen Werkstücke 4, 54 in Förderrichtung 10, 60 transportierbar sind.

Das erfindungsgemäße Verfahren sieht vor, dass eine oben genannte Werkstückzuführvorrichtung mit zumindest zwei Werkstückaufnahmepositionen zum Auflegen von einem Werkstück in der jeweiligen Werkstückaufnahmeposition und mit zumindest einer Werkstückentnahmeposition zum Entnehmen eines Werkstücks betrieben wird, wobei Werkstückfördermittel zum Fördern aufgelegter Werkstücke in einer Förderrichtung von der zumindest einen Werkstückaufnahmeposition hin zu einer der Werkstückentnahmepositionen vorgesehen sind, und wobei zumindest ein Signalmittel vorgesehen ist und angesteuert wird, um eine ausgewählte Werkstückaufnahmeposition anzuzeigen, in welcher ein Werkstück aufzulegen ist.

Das erfindungsgemäße Verfahren sieht alternativ auch vor, dass eine oben genannte Werkstückabführvorrichtung mit zumindest einer Werkstückaufnahmeposition zum Auflegen von einem Werkstück in der jeweiligen Werkstückaufnahmeposition und mit zumindest zwei Werkstückentnahmepositionen zum Entnehmen eines Werkstücks betrieben wird, wobei Werkstückfördermittel zum Fördern aufgelegter Werkstücke in einer Förderrichtung von der zumindest einen Werkstückaufnahmeposition hin zu einer der Werkstückentnahmepositionen vorgesehen sind, wobei zumindest ein Signalmittel vorgesehen ist und angesteuert wird, zur Signalisierung einer ausgewählten Werkstückentnahmeposition, von welcher ein Werkstück zu entnehmen ist.

### Bezugszeichenliste

- 1: Werkstückzuführvorrichtung
- 2: Werkstückaufnahmeposition
- 3: Werkstückaufnahmeposition
- 4: Werkstücke
- 5: Anschlagmittel
- 6: Anschlagmittel
- 7: Werkstückentnahmeposition
- 8: Manipulator
- 9: Werkstückfördermittel
- 10: Förderrichtung
- 11: Signalmittel
- 51: Werkstückabführvorrichtung
- 52: Werkstückaufnahmeposition
- 53: Werkstückaufnahmeposition
- 54: Werkstücke
- 57: Werkstückentnahmeposition
- 59: Werkstückfördermittel
- 60: Förderrichtung
- 61: Signalmittel
- 99: Werkstücktransportvorrichtung

## Patentansprüche

1. Werkstückzuführvorrichtung (1) mit zumindest zwei Werkstückaufnahmepositionen (2,3) zum Auflegen von einem Werkstück (4) in der jeweiligen Werkstückaufnahmeposition (2,3) und mit zumindest einer Werkstückentnahmeposition (7) zum Entnehmen eines Werkstücks (4), mit Werkstückfördermitteln (9) zum Fördern aufgelegter Werkstücke (4) in einer Förderrichtung (10) von einer der zumindest zwei Werkstückaufnahmepositionen (2,3) hin zu einer der Werkstückentnahmepositionen (7), **dadurch gekennzeichnet, dass** zumindest ein Signalmittel (11) vorgesehen ist, zur Signalisierung einer ausgewählten Werkstückaufnahmeposition (2,3), in welcher ein Werkstück (4) auflegbar ist, wobei das Signalmittel (11) aktivierbar ist und angesteuert wird, um eine ausgewählte Werkstückaufnahmeposition anzuzeigen, in welcher ein Werkstück aufzulegen ist.

2. Werkstückzuführvorrichtung (1) nach Anspruch 1, **dadurch gekennzeichnet, dass** die zumindest zwei Werkstückaufnahmepositionen (2,3) in einer Richtung senkrecht zur Förderrichtung (10) benachbart zueinander angeordnet sind.

3. Werkstückzuführvorrichtung (1) nach Anspruch 1 oder 2, **dadurch gekennzeichnet, dass** zumindest einer Werkstückaufnahmeposition (2,3) oder jeder bis auf eine Werkstückaufnahmeposition (2,3) oder jeder Werkstückaufnahmeposition (2,3) ein Signalmittel (11) zugeordnet ist, welches aktivierbar ist, um anzuzeigen, dass ein Werkstück (4) in die zugeordnete Werkstückaufnahmeposition (2,3) auflegbar ist.

4. Werkstückzuführvorrichtung (1) nach Anspruch 3, **dadurch gekennzeichnet, dass** das Signalmittel (11) ein Anschlagmittel (6) aufweist, welches ausfahrbar ist, um anzuzeigen, dass ein Werkstück (4) in die dem Anschlagmittel (6) zugeordnete Werkstückaufnahmeposition (2,3) auflegbar ist.

5. Werkstückzuführvorrichtung (1) nach Anspruch 3 oder 4, **dadurch gekennzeichnet, dass** das Signalmittel (11) ein optisches und/oder akustisches Signalmittel (11) aufweist, mittels welchem eine ausgewählte Werkstückaufnahmeposition (2,3) anzeigbar ist, um anzuzeigen, dass ein Werkstück (4) in die von dem Signalmittel (11) angezeigte Werkstückaufnahmeposition (2,3) auflegbar ist.

6. Werkstückabführvorrichtung (51) mit zumindest einer Werkstückaufnahmeposition (52,53) zum Auflegen von einem Werkstück (54) in der jeweiligen Werkstückaufnahmeposition (52,53) und mit zumindest zwei Werkstückentnahmepositionen (57) zum Entnehmen eines Werkstücks (54), mit Werkstückfördermitteln (59) zum Fördern aufgelegter Werkstücke (54) in einer Förderrichtung (60) von der zumindest einen Werkstückaufnahmeposition (52,53) hin zu einer der Werkstückentnahmepositionen (57), **dadurch gekennzeichnet, dass** zumindest ein Signalmittel (61) vorgesehen ist, zur Signalisierung einer ausgewählten Werkstückentnahmeposition (57), von welcher ein Werkstück (54) entnehmbar ist.

7. Werkstückabführvorrichtung (51) nach Anspruch 6, **dadurch gekennzeichnet, dass** die zumindest zwei Werkstückentnahmepositionen (57) in einer Richtung senkrecht zur Förderrichtung (60) benachbart zueinander angeordnet sind.

8. Werkstückabführvorrichtung (51) nach Anspruch 6 oder 7, **dadurch gekennzeichnet, dass** zumindest einer Werkstückentnahmeposition (57) oder jeder bis auf eine Werkstückentnahmeposition (57) oder jeder Werkstückentnahmeposition (57) ein Signalmittel (61) zugeordnet ist, welches aktivierbar ist, um anzuzeigen, dass ein Werkstück (54) von der zugeordneten Werkstückentnahmeposition (57) entnehmbar ist.

9. Werkstückabführvorrichtung (51) nach Anspruch 8, **dadurch gekennzeichnet, dass** das Signalmittel (61) ein Anschlagmittel (56) aufweist, welches ein- oder ausfahrbar ist, um anzuzeigen, dass ein Werkstück (54) von der dem Anschlagmittel (56) zugeordneten Werkstückentnahmeposition (57) entnehmbar ist.

10. Werkstückabführvorrichtung (51) nach Anspruch 8 oder 9, **dadurch gekennzeichnet, dass** das Signalmittel (61) ein optisches und/oder akustisches Signalmittel (61) aufweist, mittels welchem eine ausgewählte Werkstückentnahmeposition (57) anzeigbar ist, um anzuzeigen, dass ein Werkstück (54) von der von dem Signalmittel (61) angezeigten Werkstückentnahmeposition (57) entnehmbar ist.

11. Werkstücktransportvorrichtung (99) mit einer Werkstückzuführvorrichtung (1) nach einem der vorhergehenden Ansprüche 1 bis 5 und/oder mit einer Werkstückabführvorrichtung (51) nach einem der vorhergehenden Ansprüche 6 bis 10.

12. Verfahren zum Betreiben einer Werkstückzuführvorrichtung (1) mit zumindest zwei Werkstückaufnahmepositionen (2,3) zum Auflegen von einem Werkstück (4) in der jeweiligen Werkstückaufnahmeposition (2,3) und mit zumindest einer Werkstückentnahmeposition (7) zum Entnehmen eines Werkstücks (4), mit Werkstückfördermitteln (9) zum Fördern aufgelegter Werkstücke (4) in einer Förderrichtung (10) von einer der zumindest zwei Werkstückaufnahmepositionen (2,3) hin zu einer der Werkstückentnahmepositionen (7), **dadurch gekennzeichnet, dass** zumindest ein Signalmittel (11) vorgesehen ist und angesteuert wird, um eine ausgewählte Werkstückaufnahmeposition (2,3) anzuzeigen, in welcher ein Werkstück (4) aufzulegen ist.

13. Verfahren nach Anspruch 12, **dadurch gekennzeichnet, dass** das Signalmittel (11) ein Anschlagmittel (6) aufweist, welches ausgefahren wird, um anzuzeigen, dass ein Werkstück (4) in die dem Anschlagmittel (6) zugeordnete Werkstückaufnahmeposition (2,3) aufzulegen ist.

14. Verfahren nach Anspruch 12 oder 13, **dadurch gekennzeichnet, dass** das Signalmittel (11) ein optisches und/oder akustisches Signalmittel (11) aufweist, welches aktiviert wird, um anzuzeigen, dass ein Werkstück (4) in die von dem Signalmittel (11) angezeigte Werkstückaufnahmeposition (2,3) aufzulegen ist.

15. Verfahren zum Betreiben einer Werkstückabführvorrichtung (51) mit zumindest einer Werkstückaufnahmeposition (52,53) zum Auflegen von einem Werkstück (54) in der jeweiligen Werkstückaufnahmeposition (52,53) und mit zumindest zwei Werkstückentnahmepositionen (57) zum Entnehmen eines Werkstücks (54), mit Werkstückfördermitteln (59) zum Fördern aufgelegter Werkstücke (54) in einer Förderrichtung (60) von der zumindest einen Werkstückaufnahmeposition (52,53) hin zu einer der Werkstückentnahmepositionen (57), **dadurch gekennzeichnet, dass** zumindest ein Signalmittel (61) vorgesehen ist und angesteuert wird, zur Signalisierung einer ausgewählten Werkstückentnahmeposition (57), von welcher ein Werkstück (54) zu entnehmen ist.

16. Verfahren nach Anspruch 15, **dadurch gekennzeichnet, dass** das Signalmittel (61) ein Anschlagmittel (56) aufweist, welches ein- oder ausgefahren wird, um anzuzeigen, dass ein Werkstück (54) von der dem Anschlagmittel (56) zugeordneten Werkstückentnahmeposition (57) zu entnehmen ist.

17. Verfahren nach Anspruch 15 oder 16, **dadurch gekennzeichnet, dass** das Signalmittel (61) ein optisches und/oder akustisches Signalmittel (61) aufweist, welches angesteuert wird, um anzuzeigen, dass ein Werkstück (54) von der von dem Signalmittel (61) angezeigten Werkstückentnahmeposition (57) zu entnehmen ist.

## Claims

1. A workpiece feed device (1) with at least two workpiece receiving positions (2, 3) for loading a workpiece (4) in the respective workpiece receiving position (2, 3) and with at least one workpiece removal position (7) for removing a workpiece (4), with workpiece conveying means (9) for conveying loaded workpieces (4) in a conveying direction (10) from one of the at least two workpiece receiving positions (2, 3) to one of the workpiece removal positions (7), **characterised in that** at least one signal means (11) is provided for signalling a selected workpiece receiving position (2, 3) in which a workpiece (4) can be loaded, wherein the signal means (11) can be activated and is controlled to indicate a selected workpiece receiving position in which a workpiece is to be loaded.

2. The workpiece feed device (1) as claimed in claim 1, **characterised in that** the at least two workpiece receiving positions (2, 3) are arranged adjacently to each other in a direction perpendicular to the conveying direction (10).

3. The workpiece feed device (1) as claimed in claim 1 or 2, **characterised in that** there is assigned to at least one workpiece receiving position (2, 3), or to each apart from one workpiece receiving position (2, 3), or to each workpiece receiving position (2, 3), a signal means (11) that can be activated to indicate that a workpiece (4) can be loaded into the assigned workpiece receiving position (2, 3).

4. The workpiece feed device (1) as claimed in claim 3, **characterised in that** the signal means (11) has a stop means (6) that can be extended to indicate that a workpiece (4) can be loaded into the workpiece receiving position (2, 3) assigned to the stop means (6) .

5. The workpiece feed device (1) as claimed in claim 3 or 4, **characterised in that** the signal means (11) has an optical and/or acoustic signal means (11), by means of which a selected workpiece receiving position (2, 3) can be indicated to indicate that a workpiece (4) can be loaded into the workpiece receiving position (2, 3) indicated by the signal means (11).

6. A workpiece discharge device (51) with at least one workpiece receiving position (52, 53) for loading a workpiece (54) in the respective workpiece receiving position (52, 53) and with at least two workpiece removal positions (57) for removing a workpiece (54), with workpiece conveying means (59) for conveying loaded workpieces (54) in a conveying direction (60) from the at least one workpiece receiving position (52, 53) to one of the workpiece removal positions (57), **characterised in that** at least one signal means (61) is provided for signalling a selected workpiece removal position (57) from which a workpiece (54) can be removed.

7. The workpiece discharge device (51) as claimed in claim 6, **characterised in that** the at least two workpiece removal positions (57) are arranged adjacently to each other in a direction perpendicular to the conveying direction (60).

8. The workpiece discharge device (51) as claimed in claim 6 or 7, **characterised in that** there is assigned to at least one workpiece removal position (57), or to each apart from one workpiece removal position (57), or to each workpiece removal position (57), a signal means (61) that can be activated to indicate that a workpiece (54) can be removed from the assigned workpiece removal position (57).

9. The workpiece discharge device (51) as claimed in claim 8, **characterised in that** the signal means (61) has a stop means (56) that can be retracted or extended to indicate that a workpiece (54) is to be removed from the workpiece removal position (57) assigned to the stop means (56).

10. The workpiece discharge device (51) as claimed in claim 8 or 9, **characterised in that** the signal means (61) has an optical and/or acoustic signal means (61) by means of which a selected workpiece removal position (57) can be indicated to indicate that a workpiece (54) is to be removed from the workpiece removal position (57) indicated by the signal means (61) .

11. A workpiece transport device (99) with a workpiece feed device (1) as claimed in any one of the preceding claims 1 to 5 and/or with a workpiece discharge device (51) as claimed in any one of the preceding claims 6 to 10.

12. A method for operating a workpiece feed device (1) with at least two workpiece receiving positions (2, 3) for loading a workpiece (4) in the respective workpiece receiving position (2, 3) and with at least one workpiece removal position (7) for removing a workpiece (4), with workpiece conveying means (9) for conveying loaded workpieces (4) in a conveying direction (10) from one of the at least two workpiece receiving positions (2, 3) to one of the workpiece removal positions (7), **characterised in that** at least one signal means (11) is provided and controlled for signalling a selected workpiece receiving position (2, 3) into which a workpiece (4) is to be loaded.

13. The method as claimed in claim 12, **characterised in that** the signal means (11) has a stop means (6) that is extended to indicate that a workpiece (4) is to be loaded into the workpiece receiving position (2, 3) assigned to the stop means (6).

14. The method as claimed in claim 12 or 13, **characterised in that** the signal means (11) has an optical and/or acoustic signal means (11) which is activated to indicate that a workpiece (4) is to be loaded into the workpiece receiving position (2, 3) indicated by the signal means (11).

15. A method for operating a workpiece discharge device (51) with at least one workpiece receiving position (52, 53) for loading a workpiece (54) in the respective workpiece receiving position (52, 53) and with at least two workpiece removal positions (57) for removing a workpiece (54), with workpiece conveying means (59) for conveying loaded workpieces (54) in a conveying direction (60) from the at least one workpiece receiving position (52, 53) to one of the workpiece removal positions (57), **characterised in that** at least one signal means (61) is provided and controlled for signalling a selected workpiece removal position (57) from which a workpiece (54) is to be removed.

16. The method as claimed in claim 15, **characterised in that** the signal means (61) has a stop means (56) that is retracted or extended to indicate that a workpiece (54) is to be removed from the workpiece removal position (57) assigned to the stop means (56).

17. The method as claimed in claim 15 or 16, **characterised in that** the signal means (61) has an optical and/or acoustic signal means (61) which is activated to indicate that a workpiece (54) is to be removed from the workpiece removal position (57) indicated by the signal means (61).

## Revendications

1. Dispositif d'alimentation en pièces d'usinage (1) ayant au moins deux positions de réception de pièces d'usinage (2, 3) pour placer une pièce d'usinage (4) dans la position de réception respective (2, 3) des pièces d'usinage et ayant au moins une position d'enlèvement (7) des pièces d'usinage pour l'enlèvement d'une pièce d'usinage (4), ledit dispositif d'alimentation en pièces d'usinage comprenant des moyens de convoyage de pièces d'usinage (9) pour le convoyage de pièces d'usinage (4) ayant été placées, ledit convoyage étant effectué dans une direction de convoyage (10) à partir de l'une des au moins deux positions de réception (2, 3) des pièces d'usinage jusqu'à l'une des positions d'enlèvement (7) des pièces d'usinage, **caractérisé en ce qu'**il est prévu au moins un moyen d'émission de signal (11) servant à la signalisation d'une position de réception sélectionnée (2, 3) des pièces d'usinage, position de réception dans laquelle peut être placée une pièce d'usinage (4), où le moyen d'émission de signal (11) peut être activé et est commandé pour indiquer une position de réception sélectionnée de pièces d'usinage, position dans laquelle doit être placée une pièce d'usinage.

2. Dispositif d'alimentation en pièces d'usinage (1) selon la revendication 1, **caractérisé en ce que** les au moins deux positions de réception (2, 3) des pièces d'usinage sont disposées en étant adjacentes l'une à l'autre dans une direction perpendiculaire à la direction de convoyage (10).

3. Dispositif d'alimentation en pièces d'usinage (1) selon la revendication 1 ou 2, **caractérisé en ce qu'**un moyen d'émission de signal (11) est associé à au moins une position de réception (2, 3) des pièces d'usinage ou à chaque position de réception (2, 3) - à l'exception d'une seule - des pièces d'usinage, ou bien associé à chaque position de réception (2, 3) des pièces d'usinage, lequel moyen d'émission de signal peut être activé pour indiquer qu'une pièce d'usinage (4) peut être placée dans la position de réception associée (2, 3) des pièces d'usinage.

4. Dispositif d'alimentation en pièces d'usinage (1) selon la revendication 3, **caractérisé en ce que** le moyen d'émission de signal (11) présente un moyen formant butée (6) qui peut être sorti pour indiquer qu'une pièce d'usinage (4) peut être placée dans la position de réception (2, 3) des pièces d'usinage, ladite position de réception étant associée au moyen formant butée (6).

5. Dispositif d'alimentation en pièces d'usinage (1) selon la revendication 3 ou 4, **caractérisé en ce que** le moyen d'émission de signal (11) présente un moyen d'émission de signal optique et/ou acoustique (11) avec lequel peut être indiquée une position de réception sélectionnée (2, 3) des pièces d'usinage, afin d'indiquer qu'une pièce d'usinage (4) peut être placée dans la position de réception (2, 3) des pièces d'usinage, ladite position de réception étant indiquée par le moyen d'émission de signal (11).

6. Dispositif d'évacuation (51) des pièces d'usinage ayant au moins une position de réception (52, 53) des pièces d'usinage servant à placer une pièce d'usinage (54) dans la position de réception respective (52, 53) des pièces d'usinage, et ayant au moins deux positions d'enlèvement (57) des pièces d'usinage servant à l'enlèvement d'une pièce d'usinage (54), ledit dispositif d'évacuation des pièces d'usinage comprenant des moyens de convoyage (59) des pièces d'usinage pour le convoyage de pièces d'usinage (54) ayant été placées, ledit convoyage étant effectué dans une direction de convoyage (60) à partir de l'au moins une position de réception (52, 53) des pièces d'usinage jusqu'à l'une des positions d'enlèvement (57) des pièces d'usinage, **caractérisé en ce qu'**il est prévu au moins un moyen d'émission de signal (61) servant à la signalisation d'une position d'enlèvement sélectionnée (57) des pièces d'usinage, position d'enlèvement à partir de laquelle peut être enlevée une pièce d'usinage (54).

7. Dispositif d'évacuation (51) des pièces d'usinage selon la revendication 6, **caractérisé en ce que** les au moins deux positions d'enlèvement (57) des pièces d'usinage sont disposées en étant adjacentes l'une à l'autre dans une direction perpendiculaire à la direction de convoyage (60).

8. Dispositif d'évacuation (51) des pièces d'usinage selon la revendication 6 ou 7, **caractérisé en ce qu'**un moyen d'émission de signal (61) est associé à au moins une position d'enlèvement (57) des pièces d'usinage ou à chaque position d'enlèvement (57) - à l'exception d'une seule - des pièces d'usinage, ou bien associé à chaque position d'enlèvement (57) des pièces d'usinage, lequel moyen d'émission de signal peut être activé pour indiquer qu'une pièce d'usinage (54) peut être enlevée à partir de la position d'enlèvement associée (57) des pièces d'usinage.

9. Dispositif d'évacuation (51) des pièces d'usinage selon la revendication 8, **caractérisé en ce que** le moyen d'émission de signal (61) présente un moyen formant butée (56) qui peut être rentré ou sorti pour indiquer qu'une pièce d'usinage (54) peut être enlevée à partir de la position d'enlèvement (57) des pièces d'usinage, ladite position d'enlèvement étant associée au moyen formant butée (56).

10. Dispositif d'évacuation (51) des pièces d'usinage selon la revendication 8 ou 9, **caractérisé en ce que** le moyen d'émission de signal (61) présente un moyen d'émission de signal optique et/ou acoustique (61) avec lequel peut être indiquée une position d'enlèvement sélectionnée (57) des pièces d'usinage, afin d'indiquer qu'une pièce d'usinage (54) peut être enlevée à partir de la position d'enlèvement (57) des pièces d'usinage, ladite position d'enlèvement étant indiquée par le moyen d'émission de signal (61).

11. Dispositif de transport de pièces d'usinage (99) comprenant un dispositif d'alimentation en pièces d'usinage (1) selon l'une quelconque des revendications précédentes 1 à 5 et/ou comprenant un dispositif d'évacuation (51) des pièces d'usinage selon l'une quelconque des revendications précédentes 6 à 10.

12. Procédé de fonctionnement d'un dispositif d'alimentation en pièces d'usinage (1) ayant au moins deux positions de réception de pièces d'usinage (2, 3) pour placer une pièce d'usinage (4) dans la position de réception respective (2, 3) des pièces d'usinage, et ayant au moins une position d'enlèvement (7) des pièces d'usinage pour l'enlèvement d'une pièce d'usinage (4), ledit dispositif d'alimentation en pièces d'usinage comprenant des moyens de convoyage de pièces d'usinage (9) pour le convoyage de pièces d'usinage (4) ayant été placées, ledit convoyage étant effectué dans une direction de convoyage (10) à partir de l'une des au moins deux positions de réception (2, 3) des pièces d'usinage jusqu'à l'une des positions d'enlèvement (7) des pièces d'usinage, **caractérisé en ce qu'**au moins un moyen d'émission de signal (11) est prévu et est commandé pour indiquer une position de réception sélectionnée (2, 3) des pièces d'usinage, position de réception dans laquelle doit être placée une pièce d'usinage (4).

13. Procédé selon la revendication 12, **caractérisé en ce que** le moyen d'émission de signal (11) présente un moyen formant butée (6) qui est sorti pour indiquer qu'une pièce d'usinage (4) est à placer dans la position de réception (2, 3) des pièces d'usinage, ladite position de réception étant associée au moyen formant butée (6).

14. Procédé selon la revendication 12 ou 13, **caractérisé en ce que** le moyen d'émission de signal (11) présente un moyen d'émission de signal optique et/ou acoustique (11) qui est activé pour indiquer qu'une pièce d'usinage (4) est à placer dans la position de réception (2, 3) des pièces d'usinage, ladite position de réception étant indiquée par le moyen d'émission de signal (11).

15. Procédé de fonctionnement d'un dispositif d'évacuation (51) des pièces d'usinage ayant au moins une position de réception (52, 53) des pièces d'usinage servant à placer une pièce d'usinage (54) dans la position de réception respective (52, 53) des pièces d'usinage, et ayant au moins deux positions d'enlèvement (57) des pièces d'usinage pour l'enlèvement d'une pièce d'usinage (54), ledit dispositif d'évacuation des pièces d'usinage comprenant des moyens de convoyage (59) des pièces d'usinage pour le convoyage de pièces d'usinage (54) ayant été placées, ledit convoyage étant effectué dans une direction de convoyage (60) à partir de l'au moins une position de réception (52, 53) des pièces d'usinage jusqu'à l'une des positions d'enlèvement (57) des pièces d'usinage, **caractérisé en ce qu'**au moins un moyen d'émission de signal (61) est prévu et est commandé pour la signalisation d'une position d'enlèvement sélectionnée (57) des pièces d'usinage, position d'enlèvement à partir de laquelle doit être enlevée une pièce d'usinage (54).

16. Procédé selon la revendication 15, **caractérisé en ce que** le moyen d'émission de signal (61) présente un moyen formant butée (56) qui est rentré ou sorti pour indiquer qu'une pièce d'usinage (54) est à enlever à partir de la position d'enlèvement (57) des pièces d'usinage, ladite position d'enlèvement étant associée au moyen formant butée (56).

17. Procédé selon la revendication 15 ou 16, **caractérisé en ce que** le moyen d'émission de signal (61) présente un moyen d'émission de signal (61) optique et/ou acoustique qui est commandé pour indiquer qu'une pièce d'usinage (54) est à enlever à partir de la position d'enlèvement (57) des pièces d'usinage, ladite position d'enlèvement étant indiquée par le moyen d'émission de signal (61).
